# EUROPEAN PATENT SPECIFICATION

(11) **EP 2 847 836 B1**
(45) Date of publication and mention of the grant of the patent: **11.09.2019**
(21) Application number: 13788540.6
(22) Date of filing: 08.05.2013
(51) Int. Cl.: H02G 1/06, E02F 5/10, F16L 1/032, G02B 6/50, E02F 5/08, E02F 5/12, E02F 5/14, H02G 9/02

(54) **MACHINE FOR SAWING TRENCHES AND PLACING DUCTS/CABLES**
MASCHINE ZUM AUSSÄGEN VON GRÄBEN UND ZUR PLATZIERUNG VON LEITUNGEN/KABELN
MACHINE DE DÉCOUPE DE TRANCHÉES PAR SCIAGE ET DE MISE EN PLACE DE CONDUITS/CÂBLES

(30) Priority: 10.05.2012 SE 1250478
(43) Date of publication of application: 18.03.2015
(73) Proprietor: DellCron Innovation AB, 126 14 Stockholm (SE)
(72) Inventor: GUSTAVSSON, Conny, S-129 45 Hägersten (SE); HULTMAN, Hasse, S-136 43 Handen (SE)
(74) Representative: Heimdal, Pär
(86) International application number: PCT/SE2013/050522
(87) International publication number: WO 2013/169199

(56) References cited:
- WO-A1-89/00928
- WO-A1-2011/093764
- WO-A1-2011/093764
- US-A- 3 851 489
- US-A- 3 931 717
- US-A- 3 931 717
- US-A1- 2009 010 716
- US-B1- 6 637 978

## Description

### Technical Field

The present invention relates to a machine for sawing micro trenches and placing ducts/cables in trenches. More specifically, the invention relates to a machine according to claim 1 A machine according to the preamble of claim 1 is disclosed in WO 2011/093764 A1.

### Background of the Invention

Micro Trenching is expected to become the dominating method for building Fiber-To-The-Home (FTTH) in areas with detached or semi-detached houses. In Sweden around 400 000 houses are expected to be connected to a fiber network during the next 5 - 10 years. The world market is enormous and may be estimated to around 100 - 500 times the Swedish market. This means that somewhere between 40 million to 200 million houses may be connected during the next 20 years.

When placing ducts and/or cables in micro trenches a (road) sawing machine is used for sawing trenches in which the ducts/cables are placed. Therefore, crucial for the economy when building FTTH using micro trenching is the lifespan of the saw blade that is used for sawing the trench. As engines with 100 horse power (74600 W) or more may be used for driving the saw blade it is understandable that if the friction between the saw blade and the sides of the trench increases, the temperature of the saw blade will also increase rapidly. In a few seconds the temperature of the saw blade can increase so much that the saw blade is destroyed due to the heat long before it is mechanically worn out.

The friction between the saw blade and the sides of the trench will for example increase if the saw blade changes its angle relative to the angle of the trench sawed earlier. This may happen if the ground surface on which the sawing machine is moving forward is uneven. Such unevenness may result in that the sawing machine leans a few degrees from one side to the other (perpendicular to the sawing direction) and thereby changing the saw blade angle.

### Summary of the Invention

An object of the present invention is to provide a machine for sawing micro trenches and placing ducts/communication cables which fully or in part solves the problems and drawbacks of prior art. Another object of the present invention is to provide a sawing machine which reduces the friction of the saw blade when sawing micro trenches.

The above mentioned objects are achieved with a machine arranged for sawing micro trenches and placing ducts/cables in micro trenches, said machine comprising a saw blade arranged for sawing a micro trench in an area; said machine further comprising:
- a stabilizing device arranged for stabilizing the walls of said micro trench when placing ducts/cables into said micro trench, said stabilizing device being positioned immediately behind said saw blade in said micro trench, and said stabilizing device comprising guiding means for guiding at least one duct/cable when placed into said micro trench;
- at least three wheels for driving said machine, wherein said wheels are individually vertically adjustable so that a height and/or tilting of said machine relative to ground can be controlled;
- a position sensor for each of said wheels, said position sensors being arranged to detect the vertical position of its associated wheel.

Embodiments of the machine according to the invention are defined in the appended dependent claims and disclosed in the following detailed description.

The machine according to the present invention makes it possible to control the saw angle of the saw blade relative to the ground thereby reducing the friction when sawing trenches. This saves money since the lifespan of each saw blade can be prolonged. Further, the vertical height of the machine can also be controlled with the present invention which means that suitable sawing height can easily be obtained. It is therefore realised that the arrangement of individually vertically adjustable wheels gives plural advantages over prior art.

Other advantages and applications of the present invention will be apparent from the following detailed description of the invention.

### Brief Description of the Drawings

The appended drawings are intended to clarify and explain the present invention, in which:
- Figure 1 shows a flow chart of MTT;
- Figure 2 shows a flow chart of an embodiment of MTT;
- Figure 3a and 3b schematically shows a cross section of a roadway area with a micro trench;
- Figure 4 schematically shows the cross section in figure 3, wherein the micro trench is filled with filling material such as sand and sealed with two sealing layers;
- Figure 5 shows a typical layout of a FTTH network;
- Figure 6 shows how to saw branches to individual homes from a main micro trench;
- Figure 7 shows branching to individual homes if boring is used instead of sawing;
- Figure 8 shows a sawing machine with its sawing blade/disc cutter and a stabilizing device for placing ducts/cables immediately behind the sawing disc;
- Figure 9 shows the sawing machine where the stabilizing device is adapted for placing a plurality of ducts/cables at the same time while maintaining the order of the ducts/cables in the micro trench; and
- Figure 10 shows in detail where to cut the top duct so that it will be long enough to reach its final destination;
- Figures 11-13 shows further embodiments of the stabilizing device (the channels are only illustrated in figures 11-13 and should therefore not be seen as true representations); and
- Figure 14 shows an embodiment of the machine with a filling channel for guiding filling material into the trench.

### Detailed Description of the Invention

To solve the aforementioned and other problems, the present invention relates to a sawing machine comprising a saw blade arranged for sawing micro trenches in an area. The machine further comprises a stabilizing device arranged for stabilizing the walls of the micro trenches when placing ducts/cables into the same. Moreover, the stabilizing device is positioned immediately behind the saw blade in the micro trench and comprises guiding means for guiding at least one duct/cable when placed into the micro trench. Furthermore, the sawing machine comprises at least three wheels for driving the machine, and the wheels are individually vertically adjustable so that a height and/or tilting of the machine relative to ground can be controlled. Thereby, with a fixed mounted sawing blade its angle relative to ground can be controlled and hence reducing friction when sawing trenches. Another advantage of the present invention is that the height of the machine above ground can also be controlled.

As the vertical height is individually adjustable for each of the wheels, it is possible to compensate the leaning of the sawing machine both in forward-backward-direction and in right-left-direction. A leaning sensor (e.g. a gyro or a sensor based on a plumb line or any other suitable technology) is through control electronics (e.g. processing means) controlling the vertical height of each of the wheels in order to keep the angle in left-right-direction of the sawing machine and thereby the saw blade constant (e.g. vertical) when the sawing machine moves forward on a ground surface leaning from one side to the other due to unevenness of the surface of the ground. According to an embodiment of the invention each of the wheels of the sawing machine is fitted with its own lifting/lowering device so as to achieve the individual vertical adjustment so that the vertical height above ground of the sawing machine may be adjusted.

Having the wheels individually vertically adjustable (e.g. by means of the lifting/lowering device on each wheel) gives the possibility for driving the sawing machine with a significant difference in height between the left and right side of the machine, e.g. one side of the sawing machine on the road and the other side on the pavement or sidewalk, if the placement of the wheels is suitable. Therefore, according to another embodiment of the invention the at least three wheels are arranged with two of the wheels on left and right corners of the machine, respectively. However, according to another embodiment of the invention the machine is fitted with the at least four wheels which are arranged on left and right corners of the machine, respectively.

Also in this case the automatic sawing angle control adjusts the protrusion on each lifting device so that the angle of the saw blade in left-right-direction is constant according to a pre-set angle (e.g. vertical) independent of the influence from an uneven surface of the road and pavement. The automatic sawing angle control also keeps a constant pre-set angle of the saw blade when driving from the road up on to the pavement with one side of the sawing machine and down on the road again. The pre-set angle is vertical or substantially vertical according to an embodiment.

Moreover, by having individually vertically adjustable wheels also gives the possibility to run the sawing machine with different height settings. This is an advantage if underground infrastructure, e.g. electrical cables, water pipes, etc. within (or close to) the sawing depth must be crossed. In this case the sawing depth may be temporarily reduced by extending all lifting devices temporarily to a higher height setting. This gives the result that the saw blade together with the stabilizing device in unchanged relative position is lifted and the sawing is continued at a depth less than the maximum depth. Also in this case the automatic sawing angle control adjusts the protrusion on each lifting device so that the angle of the saw blade in left-right-direction is constant (e.g. vertical) independent of the influence from an uneven surface which would result in leaning from one side to the other. The automatic sawing angle control also keeps a constant angle of the saw blade in the transition when changing the height setting up or down.

Moreover, according to yet another embodiment of the invention, each of the lifting/lowering devices is fitted with position sensors being arranged to detect the vertical position of its associated wheel, e.g. protrusion sensors that measures the protrusion of the lifting/lowering device. The control electronics is using the information from all these position sensors in order to determine whether to do the automatic sawing angle control by increasing the protrusion on one side of the sawing machine or by reducing the protrusion on the other side of the sawing machine. The decision is taken from the height setting given by the operator of the sawing machine. If the height setting is set to run the sawing machine on e.g. 10 cm height, the minimum protrusion on any of the lifting devices must be 10 cm and at least one of the protrusion sensors must signal exactly 10 cm. This information is sufficient for the control electronics to decide whether to do the compensation by increasing the protrusion on one side (when at least one of the protrusion sensors on the other side is signaling it has reached the height setting set by the operator) or by reducing the protrusion on one side (when all protrusion sensors on that side are signaling a height higher than the height setting by the operator). Normal height setting is zero protrusion (meaning that the saw blade is sawing at maximum depth). In this case automatic sawing angle control can only be achieved by increasing the protrusion of the lifting devices. In other words if e.g. the sawing machine starts to lean to the right, this is automatically compensated by increasing the protrusion of the lifting devices on the right side of the sawing machine and vice versa if the sawing machine starts to lean to the left the protrusion of the lifting devices on the left side of the sawing machine are increased. This is a preferred method for controlling the machine.

When changing the height setting from a high setting to a low setting, i.e. changing the sawing depth from a shallow setting to a deep setting; it is an advantage if the front of the sawing machine (in the driving direction) can be lowered first before lowering the rear of the machine. The reason is that when the sawing machine is used for micro trenching a stabilizing device is fitted immediately behind the saw blade. In order to avoid damages, the trench must be sawed deep enough to fit this stabilizing device before lowering the rear of the sawing machine. The lowering of the front and rear of the sawing machine is accomplished by reducing the protrusion of the lifting devices in the front and thereafter in the rear, respectively. Also in this case the automatic sawing angle control adjusts the protrusion on each lifting device so that the angle of the saw blade in left-right-direction is constant, e.g. vertical. In order to make this transition easier for the operator the whole transition is programmed into the saw machine computer.

In addition to the whole sawing machine being height adjustable as described above, the saw blade, and the stabilization device are also individually height adjustable between a highest position ("service position") and a lowest position ("operating position").

The saw blade is positioned in its highest position during transportation when the sawing machine is moved to a new geographic position and a trench is not sawn during the transportation. The saw blade is also in its highest position during saw blade replacement. In this case the stabilizing device with all ducts/cables remains in the trench so that the trenching may continue after the saw blade has been replaced. During saw blade replacement, the saw blade cover which may be fitted over the saw blade is opened over the whole side of the cover so that the whole saw blade is accessible.

The stabilizing device is in its highest position during transportation and during the threading of all ducts/cables and during the start of the micro trenching. During start of the trenching, the saw blade is first lowered to its operating position and the sawing machine is advanced around 1 - 2 m so that there is room in the trench to lower the stabilizing device. There must also be room enough in the trench for an anchor that holds the ducts/cables in place, so that they are not dragged after the sawing machine when it starts to move forward.

To make the threading of ducts/cables easier the stabilizing device may either be openable arranged or the stabilizing device is fitted with an openable cassette so that ducts/cables can be easily laid down in their respective channels. An openable cassette that can be removed from and attached to the stabilizing device will save time in some cases e.g. when the micro trenching is interrupted for some reason and restarted at a later time e.g. the next day.

Moreover, water is used for cooling the saw blade and for lowering the friction between the saw blade and the sides of the trench. According to yet another embodiment of the invention, the sawing machine is fitted with a device that controls the amount of cooling water supplied to the saw blade. The amount of cooling water is controlled by a sensor that measures the saw blade temperature. If the temperature increases the amount of cooling water supplied will be increased. The temperature sensor may be of the infrared type so that the sensor may be permanently mounted inside the saw blade cover.

Another indicator for increased temperature of the saw blade is that the saw blade warps and thereby causes increased vibrations when in operation. This is an early indicator for a possible failure and the saw blade must immediately be raised and allowed to cool off. This can be achieved by a vibration sensor that automatically stops the forward motion of the sawing machine and e.g. raises the saw blade to the service position. During this action the stabilizing device shall preferably remain in the trench so that the trench does not collapse.

Furthermore, according to yet another embodiment of the invention, the sawing machine comprises at least one filling channel arranged immediately behind the stabilising device or being integrated in the stabilising device. The filling channel is arranged for guiding filling material into the trench from a container via at least one hose. The container may be arranged on a mixing machine adapted for mixing filling material.

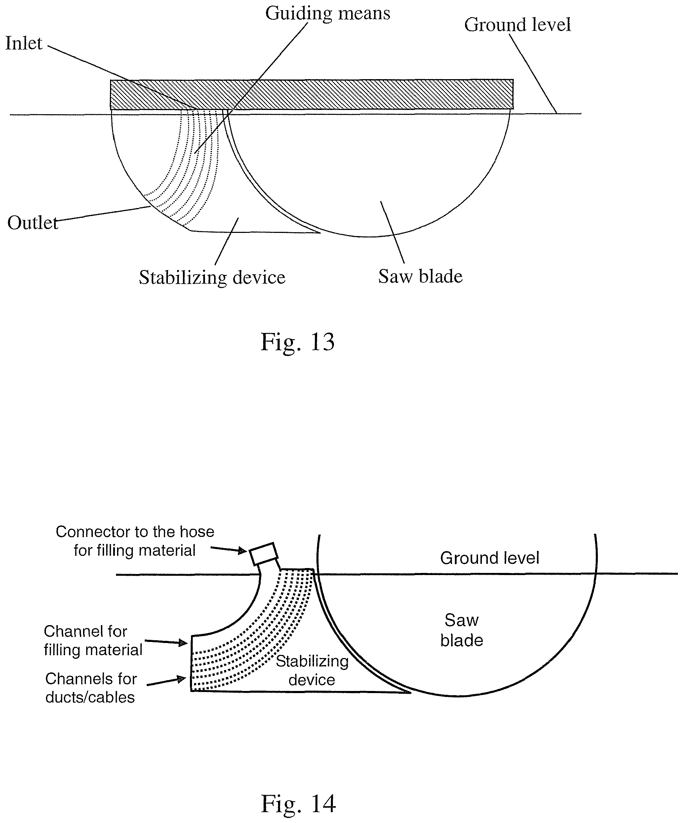

For example, the stabilizing device may be fitted with a separate filling channel for guiding filling material into the trench. This channel is connected to the hose, which in turn is connected to a pump that pumps the filling material so that a suitable level of filling material is provided in the trench. The advantage of this embodiment is to make it possible to saw the trench and lay down ducts/cables and restore the trench in one single operation and thereby save time and money. As mentioned above, the filling material may also be pumped out through a device attached to the sawing machine and placed immediately behind the stabilizing device in the trench. An embodiment of the sawing machine having a filling channel is shown in figure 14. The filling channel is in this embodiment integrated with the stabilizing device and comprises a hose connector.

Further, the sawing machine may also comprise a level sensor that detects the filling level in the trench of filling material and through a regulator automatically fills the trench up to a certain predefined level. The filling material is liquid and fluid when pumped, so that it flows easily and fills every cavity in the trench and also the gaps between the ducts/cables.

A simple system that fulfills these requirements is a sensor attached close to the outlet of filling material on the stabilizing device. The sensor has an arm with a float that floats on top of the filling material in the trench. This arm is then mechanically connected to a valve that controls the amount of filling material. A technically more advanced system that fulfills the same requirements is by having a filling level sensor based on a float or on a laser measuring system or on ultra sound or any on other suitable technique. The signal from this sensor is fed to control electronics, which compares the signal with a pre-set filling value, e.g. set by the operator of the sawing machine. If the actual level is too low the control electronics increases the flow of filling material, and on the other hand if the filling level is too high the control electronics decreases the flow of filling material. The flow of filling material may be controlled by electrically regulating the pump that pumps the filling material or by a simple electrically controlled valve positioned close to the outlet of filling material in the trench, e.g. between the hose and the stabilizing device.

Within a number of hours the filling material has cured and has become very resistant against compression forces. Yet the filling material may not become harder than that it is possible to dig into it with an ordinary shuffle if needed during later repair of the fiber network. Finally, the filling material may be colored in a signal (clearly visible) color in order to warn during future excavations that fiber cables are placed below according to another embodiment.

Another important factor for lowering the cost during micro trenching is to always run the sawing machine at an optimal speed. Depending on the material in the bearing layer below the surface layer of the ground the forward motion of the sawing machine must change. If the bearing layer contains a large amount of stones and rocks the forward motion must be slower, and on the other hand if the bearing layer only contains sand and dirt the forward motion can be faster.

Therefore, the speed forward during sawing may be automatically controlled by means of at least one torque sensor that measures/detects the torque delivered from the engine to the saw blade and through control electronics controls the forward speed of the sawing machine so that a preset constant torque is always kept by using signals from the torque senor. If the load is heavy, i.e. the bearing layer of the road, contains a large amount of stones and rocks the speed will be slower, on the other hand if the load is light, i.e. the bearing layer contains only sand and dirt, the speed will be faster. The advantage of this embodiment is that the sawing speed will be automatically adjusted for changing conditions in the bearing layer and that the speed will always be an optimal speed for the present conditions without any operator intervention. The torque can preferably be measured by having strain gages attached to the frame close to where the engine is attached or the torque may be measured indirectly from the engine rpm or any other torque measuring method. Preferably, the speed of the machine is controlled by control logic which uses signals from the torque sensor as input and outputs control signals to the drive logic of the machine.

Further, in order to achieve good forward motion also in slippery conditions (e.g. icy winter conditions) the sawing machine may be provided with individual anti-spin control on each of the wheels so that the driving torque is reduced to a wheel that starts to spin. A spinning wheel may be detected by comparing the rpm of all the wheels of the machine.

Moreover, it has been realized by the inventors that the placement/installation of ducts/cables must be made before the sides of the trench collapses and before stones (or debris) and in particular stones larger than the width of the trench are wedged into the sides of the trench and prevents the installation of the ducts/cables all the way down to the bottom of the trench. By achieving this time (and money) can be saved since the installation can be performed without unnecessary interruptions.

Therefore, the present machine is arranged for sawing micro trenches in an area. In this respect, the machine comprises a saw blade, preferable circular in shape, for sawing/cutting the micro trenches. The produced micro trenches are adapted for receiving ducts/cables which means that the micro trenches have the proper dimensions.

The machine also comprises a stabilizing device arranged for stabilizing the walls of the micro trench when placing ducts/cables, and for this purpose the stabilizing device is positioned immediately behind the saw blade in the micro trench, so that the walls are stabilized until the ducts/cables have been placed/installed by means of guiding means which are also arranged on the stabilizing device.

For stabilizing the walls of the trenches the stabilizing device comprises suitable stabilization elements such as proper side elements which are arranged to "hold up" the walls until the ducts/cables have been installed in the trenches. It is important that the stabilizing device is positioned immediately behind the saw blade so that the trenches sawn by the saw blade are stabilized directly after they are produced so that they do not collapse, or that debris or other dirt fall into the trenches before the ducts/cables have been placed. Therefore, the distance between the saw blade and the stabilizing should be kept larger than 0 mm but less than 20 mm according to an embodiment of the invention. The dimension of the stabilizing device is dependent on the size of the ducts/cables, the number of ducts to be placed at the same time, and the depth for placement in the trench. However, the width of the stabilizing device should be equal to or slightly less then the width of the sawing blade.

Furthermore, for achieving controlled and automatic placement of the ducts/cables the device has also guiding means which guides the ducts/cables into the trench in a controlled and ordered manner. The combination of stabilization and guiding has proved to reduce cost and time in an effective manner since the process of sawing and installing can be performed at the same time. The guides are arranged on the stabilizing device and hence the invention makes it possible to place the ducts/cables into the trench while the trench is stabilized by the device. The ducts/cables can therefore be placed with high precision into the trench (e.g. on the correct height in the trench) since the trench is "clean" as long as the trench is stabilized by the device.

The stabilizing device may be made of any suitable strong material so that the trenches are stabilized. The material should preferably be rigid, tough, hard and yet flexible so as to withstand stress during operation. The mounting of the stabilizing device to the sawing machine should have an amount of flexibility to prevent damage if the stabilizing device is stuck in the trench. Steel or steel alloys are suitable since they can be given the right properties by alloying with different metals such as platinum and manganese. There is limited space in the trench so the walls of the stabilizing device have to be thin as possible so as to be able to accommodate the passing the ducts/cables but still have the properties mentioned above. Steel alloys in the hardness of about 400-700 Brinell have proved suitable for these applications. It has also been realised that the stabilizing device can be made of moulded carbon fibre. Different parts of the stabilizing device can be cast separately and assembled into a stabilizing device assembly.

According to an embodiment of the invention, the device has an inlet and an outlet for ducts/cables, the inlet and outlet being connected to the guiding means. Preferably, the guiding means are channels through which the ducts/cables are guided through the stabilizing device. When in operation, the inlet is preferably above ground and vertically or close to vertically arranged while the outlet is below ground in the trench and horizontally or close to horizontally arranged in order to minimize wear and tear on the ducts/cables. Therefore, a minimum distance between the outlet and the saw blade (at ground level) is slightly longer than the recommended minimum bending radius for the ducts/cables to be installed, which means that the minimum distance is dependent on the recommended minimum bending radius. This normally translates to somewhere between 100 to 500 mm measured at ground level, but other distances are possible. Further, the inlet, outlet and guiding means may together be removably attached on the stabilizing device e.g. in the form of a removable cassette. By having a removable cassette for the guiding means, the installation time shortens in some cases as the time consuming task of inserting many ducts/cables into their respective channels may be avoided

It has also been realized by the inventors that an operating depth for the stabilizing device in the micro trench should be up to 50 mm less than an operating depth for the saw blade according to an embodiment. This difference in depth between the saw blade and the stabilizing device, when in operation, decides how quickly the ground level may change (i.e. goes down). The saw blade must have sawed the trench deep enough so that the stabilizing device never touches the bottom of the trench in order to avoid the possibility of the stabilizing device sticking to the ground. This avoids unnecessary forces on the stabilizing device and possible breakage. This may happen when the ground level suddenly becomes lower.

Moreover, according to yet another embodiment of the invention, the stabilizing device and the saw blade are arranged to be elevated and lowered independently of each other. This is advantages when for example the saw blade has to be changed due to wear or when another type of saw blade is needed (e.g. one type for asphalt and another type for concrete). Further, the stabilizing device may have to be replaced which may easily be performed if the two parts can be lowered and elevated independently of each other. Also, during shorter interruptions in the sawing operation the sawing blade is elevated, but the stabilizing device must remain in the ground, since the need for stabilization of the trench still exists. However, the stabilizing device and the saw blade may further be arranged to together be elevated and lowered. This is achieved by extending or retracting the lifting devices on all wheels as described earlier e.g. when underground infrastructure is encountered so as to avoid damage.

The stabilizing device is preferably mounted separately on the sawing machine by means of a number of movable axes for elevation and lowering. The movable axes may be powered by a dedicated engine for this specific purpose. Further, the sawing machine may have on its left and right sides (in the sawing direction) quick mount attachments means and driving means for both the stabilizing device and the saw blade, respectively. Thereby, any of the left or right sides of the sawing machine can be used for sawing and placing ducts/cables which may be necessary due to hindering infrastructure, traffic situation in the areas, etc.

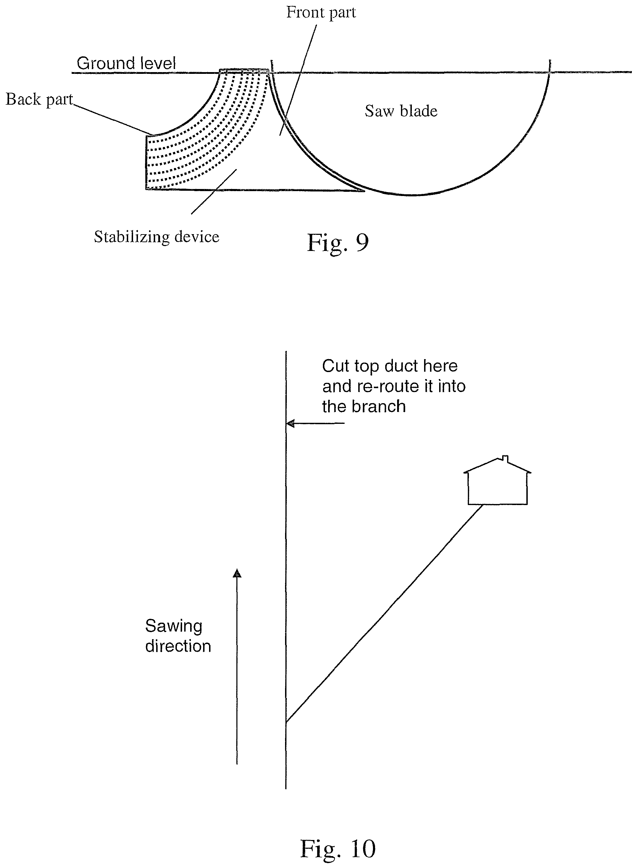

Figure 9 shows an embodiment of a machine according to the invention. The stabilizing device has a front part and a back part, wherein the front part is located immediately behind the saw blade. It can also be seen that the stabilizing device has a section at the front part that has a shape that is complementary to the shape of the saw blade, which in this particular case is circular. Thus, in case the section at the front part has a concave circular shape with the same radius, or close to the same radius, as the saw blade and is placed as close as possible and less than 20 mm away from the saw blade.The reason for this is that the underground part of the stabilizing device must be arranged so close to the saw blade such that it is virtually impossible for dirt, stones and other debris to fall to the bottom of the trench or wedge between the sides of the trench. The guiding means in this embodiment are guiding channels inside the stabilizing device. The channels are illustrated with dotted lines in the figures.

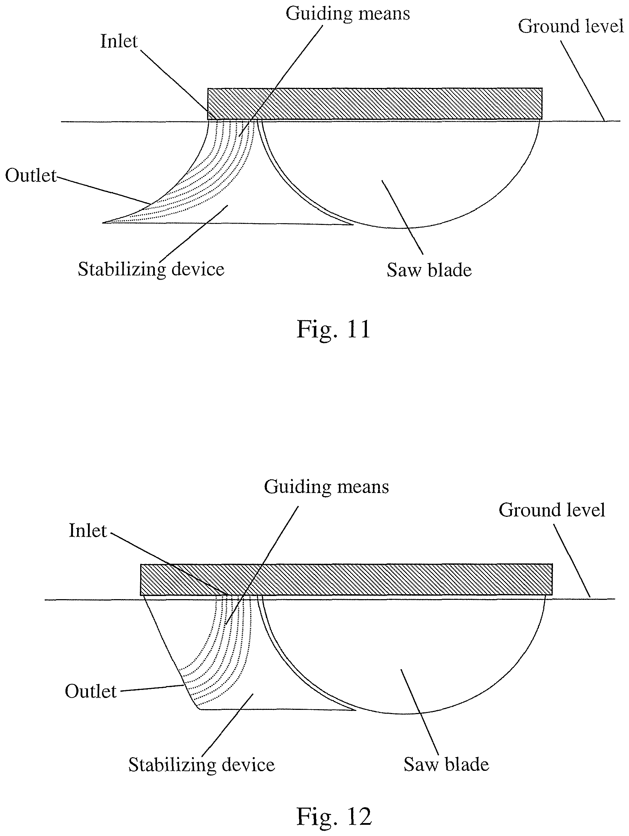

Further, the back part of the stabilizing device where the outlet is arranged may have different preferred shapes. One shape is substantially parallel to the complementary shape of the front section described above. Another shape is substantially opposite to the complementary shape, and a third embodiment defines a shape for the back part which is substantially diagonal from the base to the top of the back part in the backwards direction. These embodiments are shown in figures 11-13. It is further to be noted that the inlet, outlet and channels are arranged on the back part of the stabilizing device in this embodiment. The stabilizing device may also be axe shaped in cross section at the front part in the forward direction.

Preferably, as mentioned above the stabilizing device has a maximum width in cross section that is equal to or slightly less than a width for the saw blade. The stabilizing device must be wide enough to have room for the ducts/cables to be installed, but small enough so that it can be drawn along the sawed trench.

Another important aspect of the invention is that with the use of guiding means an order of a plurality of ducts/cables is preserved when placed in the micro trench. This is very important when more than one duct is placed at the same time. In one installation scenario, the duct/cable for a certain house is cut at a certain distance after the house. It is important that this duct/cable is one of the ducts/cables on top of the pile of ducts/cables in the trench, so that it can be easily found. The duct/cable must be cut before the stabilizing device. Therefore it is important to know which one of all ducts/cables that enters the stabilizing device will come out on top in the trench. Moreover as the colour of the duct/cable for a certain house is in many cases decided before the sawing begins, the order of the ducts/cables must be arranged so that the duct/cable with correct colour comes out on top, cut to the correct length, in the trench when that particular house is passed.

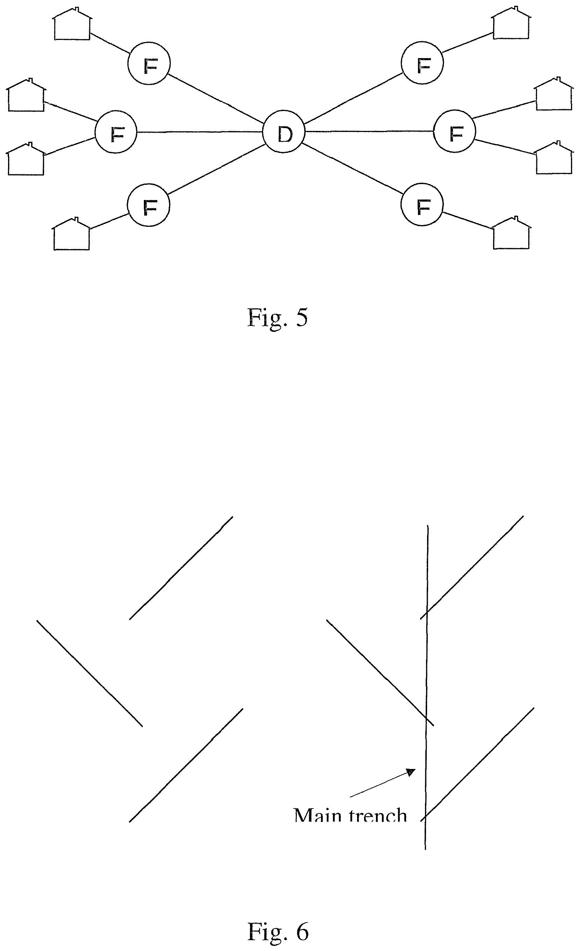

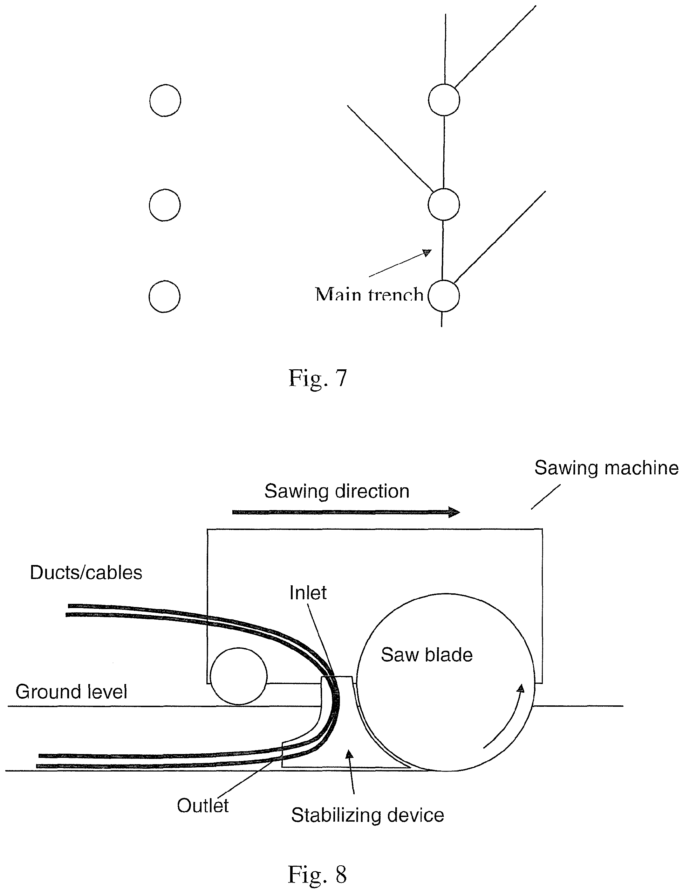

A method which allows the placement of a plurality of ducts/cables at the same time has a very high commercial value since the process of placement can be performed much faster than what has previously been know in the art. Therefore, according to this embodiment of the invention, the stabilizing device has a plurality of guiding means each guiding one or a few ducts/cables into the trench. For example, the device may comprise a plurality of channels so arranged that a know order is preserved, which means that an order of the ducts/cables out of the stabilizing device is known form the order of ducts/cables into the stabilizing device, hence the order into and out of the stabilizing device is related and known. This can e.g. be achieved by a one-to-one mapping between the inlet and the outlet of the device, which means that they do not cross each other. The order of the ducts/cables should be arranged in such a way that one of the ducts/cables on top of the pile of ducts/cables in the trench is always the one to be routed to the next location. Therefore, a downmost duct/cable entering the inlet will be an uppermost duct/cable out from the outlet, and the uppermost duct/cable entering the inlet will be a downmost duct/cable out from the outlet. The branching micro trenches may be sawn before the main trench as shown in figure 6 and 7 or the branching micro trenches may be sawn after the main trench is sawn. The particular order in which the trenches are sawn may be decided to achieve the best flow during the installation. Each branching micro trench goes to a final location for one of the ducts/cables from the main micro trench. When the main trench is sawn and the ducts/cables are installed, the uppermost duct/cable is cut (before it enters the stabilizing device) at a certain distance beyond the location of the respective branching trench, so that that duct/cable can be lifted and routed to the final location for that duct/cable, see figure 10. If the cut is made correctly the length of the duct/cable will be sufficient so that the duct/cable is long enough to reach the final location without splicing. In this way the ducts/cables are one by one routed to each passed location through the branches.

Depending on the width of the trench and the size of the ducts/cables there may be one or more ducts/cables side by side as the uppermost ducts/cables in the main trench. It is important that the duct/cable next to be routed to its final location is always one of the ones on top. To achieve this is, when cutting the main trench and placing a number of ducts/cables, to cut one of the uppermost ducts/cables, the one designated to this specific location, at a certain distance after passing the corresponding branching trench, so that the cut duct/cable can be lifted and routed through that branching micro trench to its final location. The duct/cable should be cut at a certain minimum distance after passing the corresponding branching trench, so that, when lifted from the main trench and routed towards its final location, the length is sufficient to reach the final location without splicing.

If the stabilizing device (formerly known as "plough") is designed with individual channels for the ducts/cables or with individual channels, each with room for a few ducts/cables, it is easy to know which duct/cable will be on top in the trench and thereby which duct/cable should be cut before the stabilizing device. Example of such stabilizing device is shown in Figure 9. The stabilizing device in this embodiment has a duct/cable inlet and a duct/cable outlet which is connected to each other by means of a plurality of channels as guiding means (illustrated with dotted lines) for the ducts/cables. The underground outlet of the stabilizing device may in an embodiment comprise a "matrix" (or vector) part so arranged that the channels are arranged in a matrix with *n* row and *m* columns, thereby in a controlled way horizontally and/or vertically separating the ducts/cables when placing them in the micro trench.

So in summery; one after the other, cutting one of the uppermost ducts/cables, which one is designated to a certain location, at a certain minimum distance after each branch and thereafter lifting this duct/cable from the main trench and routing it to its final location through the branch.

The machine may further comprise at least one drum arranged for holding the ducts/cables before placing them into the micro trench via the stabilizing device. In this way easy access to the ducts/cables is achieved.

Further, the machine according to the invention may also comprises other suitable means, such as: one or more engine means for powering the saw blade and the stabilizing device and/or for driving means (e.g. drive train and wheels), communication means for wireless communication with e.g. a remote server unit, processing means, memory means, sensors, GPS means, vehicle means, display means for displaying information such as graphics, data base means, reading means for reading mechanical coding means on the saw blade, immobilizer, etc.

Regarding the driving of the saw blade and/or the stabilizing device this can e.g. be performed by means of direct mechanical driving, hydraulic driving and electric driving. The mechanical driving gives the highest power transmission ration while the electrical driving gives the lowest, so the former is preferred if high power is needed which often is the case.

### Micro Trenching Technique (MTT)

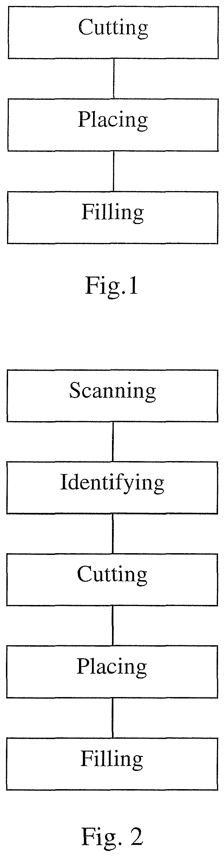

A thorough understanding of the MTT method is needed. Figure 1 shows a flow chart of a MTT method for placing at least one duct/cable below a road surface in the area comprising the steps of:
- cutting a micro trench in the area through the first layer L1 into the second layer L2;
- placing at least one duct/cable in the micro trench so that the at least one duct/cable is placed below the first layer L1; and
- filling the micro trench so as to restore the road surface.

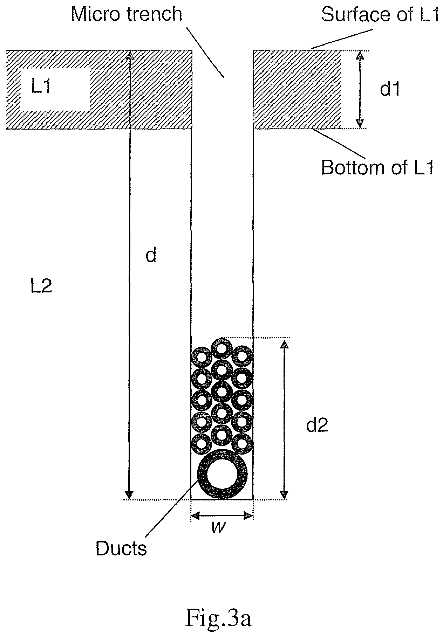

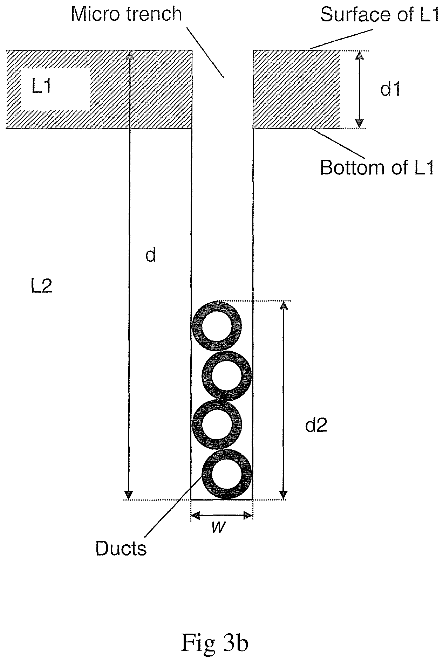

Figure 3a and 3b schematically shows a cross section of an area in which a duct is placed in a micro trench. The area in figure 3a and 3b is a three dimensional region of a typical roadway area, wherein the area comprises a first layer L1 being a road layer such as asphalt or concrete, and a second layer L2 being a bearing layer for the first layer L1 and usually consisting of macadam, sand and earth. The second layer L2 is naturally located below the first layer L1 as shown in figure 3.

The cutting step involves: cutting the micro trench through the first layer L1 into the second layer L2, which means that the micro trench is cut as shown in figure 3a and 3b. The micro trench is cut so deep that at least one duct/cable is placed in the micro trench below the first layer L1 (i.e. all installed ducts/cables are placed below the first layer L1). Using the present method all ducts and cables for fibre optic networks can be placed deep enough so that they are safe if the road layer L1 is removed and/or replaced, e.g. when repairing the road.

Thereafter, the at least one duct and/or a communication cable is placed in the micro trench. The duct is a duct arranged to hold "air-blown fibre" (so called EPFU) or fibre cables. The duct/s and/or the communication cable/s are placed in the micro trench so that they are entirely positioned below the first layer L1.

Finally, the micro trench is filled with a suitable filling material so that the road surface is restored. The filling material may be sand or any other material with suitable properties.

A filling material that is is liquid at the time of the filling and which later cures and becomed highly resistant against compression forces is a preferred filing material. The micro trench is filled with the filling material to a suitable level, and if needed the filling material is thereafter packed with a compactor that fits the width w of the micro trench.

Finally, the micro trench is sealed using a sealing material, such as bitumen, in order to get a water tight sealing. If a water tight sealing is not needed, patching may also be made with cold asphalt which is a simple and cheap method of restoration. A suitable amount of cold asphalt is simply poured and scraped into the micro trench, and thereafter compacted to a smooth and hard surface. Any excess asphalt can then be collected and removed.

The sealing step may according to a preferred embodiment involve the steps of:
- sealing the micro trench flush to a bottom of the first layer L1 with a first sealing S1; and
- sealing the micro trench flush to a surface of the first layer L1 with a second sealing S2.

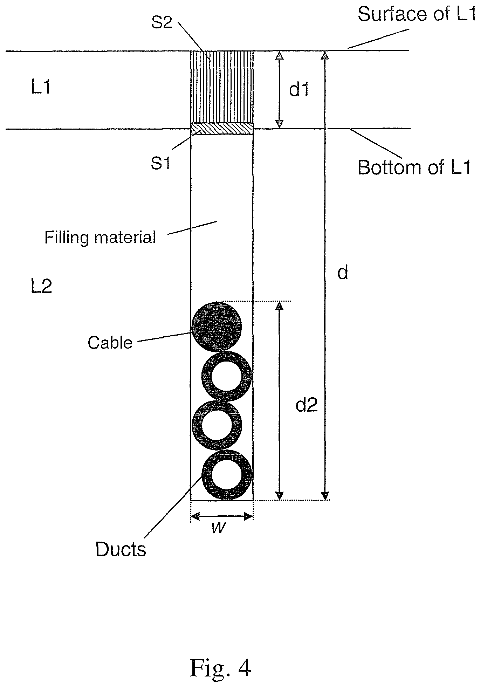

Figure 4 shows the above described embodiment. The surface and the bottom of the first layer L1 are indicated in figure 4. In order to obtain a sealed repair with high adhesion it is recommended to pour hot bitumen or bitumen mix when sealing the micro trench. However, other material such as concrete or polymer modified asphalt will work.

The first sealing S1 is put down to seal the micro trench substantially flush with the bottom of the first layer L1 so that the micro trench can be cleaned with a high-pressure washer to remove any residue of sand from the asphalt/concrete edges. After washing, the micro trench may be dried and pre-heated using a propane burner and finally, the micro trench is filled flush with the top surface of the first layer L1 using a suitable sealant such as a hot crack sealant based on bitumen.

According to yet another embodiment, the micro trench is cut with a disc cutter/sawing machine having a diamond coated sawing disc. Such a diamond coated sawing disc can easily saw through even the hardest materials, such as stone and concrete, and has proved very useful in the present application since it provides exceptionally clean cuts when cutting micro trenches. Prior art methods to cut micro trenches, such as using a sawing disc with tungsten carbide teeth, creates small cracks in the edges of the micro trench that will make complete sealing afterwards much harder and more expensive compared the present method.

The micro trench is preferably cut/sawed with a modified so-called road-saw (sawing machine) having a diamond coated sawing disc. To further optimise the performance of the road saw in the present application, the inventors have realised that one or more of the following improvements are useful and should be considered as embodiments:
- Change in rotational direction of the sawing disc to so-called "up-cut" for improved transport of cuttings;
- Modified cover for the sawing disc and a front outlet to optimise the transport of cuttings and reduce spreading of dust and leave the micro trench clean and ready for laying ducts/cables;
- Stabilizing device as shown in figure 8 and 9 with one or more guiding means for ducts/cables immediately after the sawing disc so that micro trenching and placing of ducts/cables can be carried out in one process. In case the stabilizing device has guiding means for a plurality of ducts/cables, these guiding means should be arranged so the outlets from the stabilizing device are placed on top of each other in such a way that the order of the ducts/cables from the inlet into the stabilizing device and into the micro trench is preserved;
- Trolley drawn by the road saw with holder for drums for ducts/cables and warning tape with tracking wire; and

Figure 8 shows an embodiment using a sawing machine comprising a sawing disc arranged for up-cut. Up-cut is defined as the rotating direction of the sawing disc in relation to the sawing direction as shown by figure 8. All known sawing machines have the opposite rotating direction. By changing the rotating direction of the sawing machine to up-cut helps to remove the cut material from the micro trench, thereby providing "clean" micro trenches.

Further, the sawing machine comprises a stabilizing device arranged immediately behind the sawing disc, wherein the stabilizing device has at least one guiding means, such as channels, for guiding the duct/cable when placed in the micro trench immediately after the sawing disc. If a plurality of ducts/cables is placed at the same time, the stabilizing device is arranged to be able to place the ducts/cables in preserved order. This may be achieved by having individual channels for the ducts/cables in the stabilizing device so that the order of the ducts/cables will be maintained through the stabilizing device. Thereby, it is possible before the ducts/cables enter into the stabilizing device to identify which duct/cable will come out on top in the micro trench and thereby making it possible to know which duct/cable to cut for each final location, see figure 10.

Generally, the depth *d* of the micro trench should be larger than the depth of the first layer *d1* together with the height *d2* of at least one duct or at least one communication cable according to an embodiment, i.e. *d* > *d1* + *d2* which means that the depth *d* of the micro trench is larger than the height of the first layer *d1* plus the combined height of one ore more ducts and/or communication cables. As can be deduced from figure 3a, 3b and 4, the above mentioned relation holds.

However, costs increase with increased depth *d* of the micro trench. Therefore, the micro trench should not be deeper than necessary. Normal depth *d* of the micro trench can be around 400 mm, and unlike the width *w* of the micro trench, the depth *d* can often be adjusted continuously while in operation when using a disc cutter. The cutter depth can therefore be reduced gradually as the number of ducts laid in the micro trench is reduced.

Further, the micro trench should not be wider than necessary, since a wider micro trench is more expensive than a narrow micro trench. On the other hand a narrower micro trench can make it more difficult to install the ducts/cables, so there is an optimal width of the micro trench, since e.g. if the micro trench is too narrow, all ducts/cables will be piled on top of each other so that the depth of the top duct/cable will be too shallow.

From the above discussion, the inventors have through tests realised that suitable dimensions for a micro trench should have a depth *d* between 200 - 500 mm (and preferably 300 - 500 mm) and a width *w* between 10 - 30 mm (and preferably 15 - 25 mm) according to an embodiment for installation efficiency and low cost. Further, with these dimensions minimum disruption of traffic is possible when placing ducts/cables since traffic can pass over an open micro trench.

Furthermore, with reference to the flow chart in figure 2, according to another embodiment, the method for placing at least one duct/cable comprises the steps of:
- scanning an area by means of a ground penetrating radar; and
- identifying obstacles in the area using data generated by the ground generated radar,
- cutting a micro trench in the area through the first layer L1 into the second layer L2;
- placing at least one duct/cable in the micro trench so that the at least one duct/cable is placed below the first layer (L1); and
- filling the micro trench so as to restore the road surface.

It should be noted that the steps of scanning and identifying are performed before the other steps in the method according to this embodiment.

According to this embodiment, the area is scanned by means of a ground penetrating radar device, such as a GEO-radar or any other suitable equipment.

Thereafter, possible underground obstacles in the area, such as sewer pipes, electrical cables, construction structures, etc. are identified using information generated by the ground penetrating radar device. The scanning and identifying steps means that when performing the subsequent cutting step it may be avoided to accidentally cut/damage obstacles in the area which may result in delay and extra cost in the micro trenching process. After cutting a micro trench in the scanned area, at least one duct and/or a communication cable is placed in the micro trench. Finally, the micro trench is filled with a suitable filling material so that the road surface is restored.

The method may also involve the step of: installing or blowing fibre or fibre cable in one or more ducts if ducts were placed in the micro trench.

It should also be noted that the method described above also may comprise the step of: making one or more branching points connected to the micro trench. Preferably, the branching points may be made by means of a diamond coated core drill or a hand-held sawing machine with a diamond coated sawing chain or disc. As for this described embodiment the method may also comprise the further step of: boring one or more channels from the branching points to one or more houses using controlled or guided boring. It is important that channels are bored below the first layer L1 in the second bearing layer L2. Ducts/cables are thereafter installed in these channels when the drill is pulled back.

Different aspects concerning the layout of micro trenches, branching points and channels, and strategies of cutting, branching, etc, in relation to and incorporated in the present method will be discussed in the following description.

### Layout

Figure 5 shows a typical logical structure of a Fibre To The Home (FTTH) network in a residential area, where "D" is a distribution node and "F" is a splicing point where larger fibre cables are spliced to smaller ones (or in case of a PON network where optical splitters are placed). The network between a distribution node D and a splicing point F is called distribution network and the network between the splicing point F and the individual homes is called access network. Both the ducts/cables for the distribution network and for the access network can be installed using the present method.

A residential area being constructed with FTTH is normally divided into a number of smaller residential subareas. Somewhere in the residential area or outside of the residential area there must be a site where optical panels and electronics needed to form a so-called distribution node D are housed. The distribution node D can be housed in an existing building or in a small dedicated built building or in a large ground cabinet. Each distribution node D may contain electronics and optical panels for anywhere between a few hundred households up to several thousand households. The size of the area to be built from a single distribution node D can be adjusted within wide limits and depends primarily on practical considerations, such as space in the distribution node D, difficulties with management of a large number of smaller distribution nodes D, etc. This concept can also be adapted for any number of fibres per household.

There are two main types of FTTH networks: point-to-point-networks and point-to-multipoint networks. In a so-called point-to-point-network, the distribution node D contains the other ends of all fibres that originate from the households in the residential area. If e.g. a residential area with 500 households is being equipped with 2 fibres per house, there will be 1000 incoming fibres to the distribution node D. The distribution node D should preferably have a central location in the area being built as shown in figure 5.

The fibre structure of a point-to-multipoint-network or a so-called Passive Optical Network (PON) is more or less the same. The difference being that the number of incoming fibres to the distribution node D in this case equals the number of households divided by a factor (e.g. 8, 16, 32, etc.). The examples in the continuing discussion are made assuming that a point-to-point-network is being built. However, described methods also apply to a PON if only the distribution cables are scaled accordingly.

Viewed from the distribution node D, distribution cables extend out to splicing points F in manholes or cabinets. Distribution cables are normally designed for the number of households in the area plus 10 % spare so that in the future, newly built buildings easily can be added to the network. In a point-to-point-network, if e.g. a splicing point covers an area with 22 houses and the requirement is two fibres per house, then 48 fibres from the distribution cable are needed. Fibres from the distribution cables are spliced in the splicing points F to fibres from the access cables. These access cables then extend to each one of the houses being connected.

How many houses a splicing point F serves mainly depends on economic issues. If the covered area is too large, this will increase the average length of access cables to the houses, which increases costs. On the other hand, if the covered area is too small the cost for each house will rise in relation to its share of splicing point F and distribution cable. Hence, there is an optimum size to the residential area where the cost is the lowest. The number of houses that would minimise the cost depends mainly on the topography of the residential area and how large the plots of land are on which the houses are standing, but a rule of thumb is that an optimum size is normally somewhere between 16 and 48 houses from each splicing point F.

If micro trenching is carried out using a disc cutter according to an embodiment, the splicing point F should be placed centrally in each residential subarea, with e.g. around 22 houses. The splicing point F can be physically realised in a street cabinet or in a manhole by the roadside. Then, typically 10-12 ducts extend from the ground cabinet or manhole each way along the road. Each of these ducts then extends into each of the houses. Finally, access cables are blown into each of these ducts.

### Strategy when cutting

Usually, residential areas have houses on both sides of a road, and this situation can be tackled in one of two different ways: either micro trench in the roadside on both sides of the road and connect the houses to the closest micro trench, or micro trench on only one side of the road or in the middle of the road and connect houses on both sides to this micro trench.

However, to minimise the number of micro trenches across the road, start to micro trench to a boundary between two properties (houses) on the opposite side of the road according to an embodiment. Then place a duct/channelling tube in that micro trench to each one of the two properties. In this way, a micro trench across the road need only be made for every second property on the opposite side of the road. Micro trenching across the road for every second property then this will be a cheap and cost effective method.

### Branching off a main trench

Branching off from a main micro trench (a main micro trench is defined as a micro trench along a road) can be carried out in a number of ways. The branches may be sawn either before as shown in figure 6 or after the main trench is sawn. Both methods are best done at about a 45° angle from the main micro trench in order to obtain a large radius curve for the ducts/tubing. The branches may cross the location of the main micro trench or go "flush" with the main trench. When the main micro trench is sawed and the ducts/channelling tubes are laid it is easy to one by one route one of the uppermost tubes through each of the sawed branches up to each residence, as shown in figure 10 and to the right in figure 6.

An alternative method of branching is to first bore a hole at each branching point with a suitably sized core drill. The main micro trench can then be cut along all these holes in the same manner as described above as shown in figure 7. This method is suited both to making the house connections with a micro trench cut in the way described above as well as making house connections with controlled boring.

An alternative method of branching is to first make a hole at each branching point. The holes may be made using a suitably sized core drill (for a round hole) or using a hand tool with a diamond cutting blade or chain (for a square hole). The main micro trench can then be cut along all these holes in the same manner as described above and as shown in figure 7. This method is suited both to making the house connections with a micro trench cut in the way described above as well as making house connections with controlled boring. Controlled boring is sometimes preferred for making the house connections, because it avoids (e.g. goes under) obstacles like fences, hedges, trees, etc. However, another piece of expensive machinery (core drill) is needed at the installation site.

Finally, it should be understood that the present invention is not limited to the embodiments described above, but also relates to and incorporates all embodiments within the scope of the appended claims.

## Claims

1. A machine arranged for sawing micro trenches and placing ducts/cables in micro trenches, said machine comprising a saw blade arranged for sawing a micro trench in an area; said machine further comprising:
- a stabilizing device arranged for stabilizing the walls of said micro trench when placing ducts/cables into said micro trench, said stabilizing device being positioned immediately behind said saw blade in said micro trench, and said stabilizing device comprising guiding means for guiding at least one duct/cable when placed into said micro trench;
- at least three wheels for driving said machine, wherein said wheels are individually vertically adjustable so that a height and/or tilting of said machine relative to ground can be controlled;
said machine being **characterised by** a position sensor for each of said wheels, said position sensors being arranged to detect the vertical position of its associated wheel.

2. Machine according to claim 1, wherein said guiding means are arranged so that an order of a plurality of ducts/cables is preserved when placed in said micro trench.

3. Machine according to any of the preceding claims, wherein said stabilizing device comprises an inlet and an outlet for ducts/cables, said inlet and outlet being connected to said guiding means.

4. Machine according to claim 3, wherein said guiding means are channels in said stabilizing device and said inlet and said outlet are connected to each other by means of said channels.

5. Machine according to claim 4, wherein a minimum distance between said outlet and said saw blade is between 100 to 500 mm.

6. Machine according to claim 4 or 5, wherein said inlet, said outlet and said channels together are removably attached on said stabilizing device.

7. Machine according to any of the preceding claims, wherein said stabilizing device has a front part and a back part, said front part being located immediately behind said saw blade and having a section that has a shape that is complementary to the shape of said saw blade.

8. Machine according to any of claims 6 to 7, wherein said inlet, said outlet and said channels are arranged on said back part of said stabilizing device.

9. Machine according to any of claims 7 to 8, wherein said stabilizing device has an axe shape in cross section at said front part.

10. Machine according to any of the preceding claims,
wherein said stabilizing device has a maximum width in cross section that is equal to or slightly less than a width for said saw blade; and/or
wherein a closest distance between said saw blade and said stabilizing device is larger than 0 mm but less than 20 mm; and/or
wherein an operating depth for said stabilizing device in said micro trench is up to 50 mm less than an operating depth for said saw blade; and/or
wherein said stabilizing device and said saw blade are arranged to be elevated and lowered independently of each other; and/or
further comprising at least one drum arranged for holding ducts/cables before placing said ducts/cables into said micro trench via said stabilizing device; and/or
said wheels are individually vertically adjustable by means of individual lifting/lowering devices, each individual lifting/lowering device being arranged to vertically adjust its associated wheel; and/or
said at least three wheels are arranged with two of the wheels on left and right corners of said machine, respectively.

11. Machine according to any of the preceding claims,
further comprising at least one leaning sensor arranged to detect a deviation of said machine from a preset angle.

12. Machine according to claim 11, further comprising processing means arranged to receive input signals from said position sensors and said leaning sensor and arranged to output control signals to said wheels for controlling a height and/or tilting of said machine based on said input signals.

13. Machine according to claim 12, wherein said wheels are so controlled that said saw blade is held substantially at said pre-set angle when in operation.

14. Machine according to any of the preceding claims, further comprising at least one filling channel arranged immediately behind said stabilising device or being integrated in said stabilising device, wherein said filling channel is arranged for guiding filling material into said trench from a container, comprising filling material, via a hose.

15. Machine according to claim 14, further comprising a level sensor and a regulator,
- said level sensor being arranged to detect a level of filling material in said trench, and
- said regulator being arranged to control the output of filling material from said filling channel; and
- said level sensor and said regulator further being arranged to fill said trench up to a predetermined level of filling material.

## Patentansprüche

1. Maschine zum Sägen von Schlitzen und zum Verlegen von Kanälen/Kabeln in Schlitzen, wobei die Maschine ein Sägeblatt umfasst, das in einem Bereich zum Sägen eines Schlitzes angeordnet ist; die Maschine umfasst weiterhin:
- eine Stabilisierungsvorrichtung zum Stabilisieren der Schlitzwände, wenn Kanäle/Kabel in den Schlitz eingebracht werden, wobei die Stabilisierungsvorrichtung im Schlitz unmittelbar hinter dem Sägeblatt angeordnet ist und die Stabilisierungsvorrichtung Führungsmittel zur Führung von mindestens einem Kanal/Kabel, wenn er/es in den Schlitz eingebracht wird, umfasst;
- mindestens drei Räder zum Antreiben der Maschine, wobei die Räder einzeln senkrecht eingestellt werden können, so dass die Höhe bzw. Neigung der Maschine relativ zum Boden gesteuert werden kann;
wobei die Maschine durch einen Positionssensor für jedes der Räder gekennzeichnet ist, wobei die Positionssensoren so angeordnet sind, dass die senkrechte Position des zugeordneten Rads erfasst werden kann.

2. Maschine nach Anspruch 1, wobei die Führungsmittel so angeordnet sind, dass eine Anordnung einer Vielzahl von Kanälen/Kabeln erhalten bleibt, wenn diese in den Schlitz eingebracht werden.

3. Maschine nach einem der vorhergehenden Ansprüche, wobei die Stabilisierungsvorrichtung einen Eingang und einen Ausgang für Kanäle/Kabel umfasst, wobei der Eingang und der Ausgang mit den Führungsmitteln verbunden sind.

4. Maschine nach Anspruch 3, wobei die Führungsmittel Kanäle in der Stabilisierungsvorrichtung sind und der Eingang und der Ausgang mittels der Kanäle miteinander verbunden sind.

5. Maschine nach Anspruch 4, wobei ein Mindestabstand zwischen dem Ausgang und dem Sägeblatt zwischen 100 und 500 mm liegt.

6. Maschine nach Anspruch 4 oder 5, wobei der Eingang, der Ausgang und die Kanäle zusammen abnehmbar an der Stabilisierungsvorrichtung angebracht sind.

7. Maschine nach einem der vorhergehenden Ansprüche, wobei die Stabilisierungsvorrichtung einen vorderen Teil und einen hinteren Teil aufweist, wobei der vordere Teil unmittelbar hinter dem Sägeblatt angeordnet ist und einen Abschnitt aufweist, der eine Form hat, die der Form des Sägeblatts entspricht.

8. Maschine nach Anspruch 6 oder 7, wobei der Eingang, der Ausgang und die Kanäle am hinteren Teil der Stabilisierungsvorrichtung angeordnet sind.

9. Maschine nach einem der Ansprüche 7 bis 8, wobei das Vorderteil der Stabilisierungsvorrichtung im Querschnitt axtförmig ist.

10. Maschine nach einem der vorhergehenden Ansprüche,
wobei die Stabilisierungsvorrichtung im Querschnitt eine Höchstbreite aufweist, die gleich oder geringfügig kleiner als eine Breite des Sägeblatts ist; bzw.
wobei der geringste Abstand zwischen dem Sägeblatt und der Stabilisierungsvorrichtung größer als 0 mm, aber kleiner als 20 mm ist; bzw.
wobei eine Arbeitstiefe für die Stabilisierungsvorrichtung im Schlitz bis zu 50 mm geringer als die Arbeitstiefe des Sägeblatts ist; bzw.
wobei die Stabilisierungsvorrichtung und das Sägeblatt so angeordnet sind, dass sie unabhängig voneinander angehoben und abgesenkt werden können; bzw.
ferner mindestens eine Trommel zur Halterung von Kanälen/Kabeln vor dem Verlegen der Kanäle/Kabel im Schlitz mittels der Stabilisierungsvorrichtung umfassend; bzw.
wobei die Räder mittels einzelner Hebe-/Senkvorrichtungen einzeln vertikal einstellbar sind, wobei jede einzelne Hebe-/Senkvorrichtung so angeordnet ist, dass das zugeordnete Rad senkrecht eingestellt werden kann; bzw.
die mindestens drei Räder sind so angeordnet, dass sich jeweils ein Rad an der linken und rechten Ecke der Maschine befindet.

11. Maschine nach einem der vorhergehenden Ansprüche,
ferner mindestens einen Neigungssensor, der so angeordnet ist, dass damit eine Abweichung der Maschine von einem voreingestellten Winkel erkannt werden kann, umfassend.

12. Maschine nach Anspruch 11, ferner eine Verarbeitungseinrichtung zum Empfang von Eingangssignalen von den Positionssensoren und dem Neigungssensor und zur Ausgabe von Steuersignalen an die Räder zum Steuern einer Höhe bzw. Neigung der Maschine auf der Grundlage der Eingangssignale umfassend.

13. Maschine nach Anspruch 12, wobei die Räder so gesteuert werden, dass das Sägeblatt im Betrieb weitgehend auf dem voreingestellten Winkel gehalten wird.

14. Maschine nach einem der vorhergehenden Ansprüche, ferner mindestens einen Füllkanal umfassend, der unmittelbar hinter der Stabilisierungsvorrichtung angeordnet oder in die Stabilisierungsvorrichtung integriert ist, wobei der Füllkanal so angeordnet ist, dass Füllmaterial aus einem Behälter mit Füllmaterial über einen Schlauch in den Schlitz geführt wird.

15. Maschine nach Anspruch 14, ferner einen Füllstandssensor und einem Regler umfassend;
- wobei der Füllstandssensor so angeordnet ist, dass der den Füllstand des Füllmaterials im Graben erfasst wird, und
- wobei der Regler so angeordnet ist, dass die Ausgabe von Füllmaterial aus dem Füllkanal gesteuert wird; und
- wobei der Füllstandssensor und der Regler ferner so angeordnet sind, dass der Graben bis zu einem vorbestimmten Füllmaterialstand aufgefüllt ist.

## Revendications

1. Une machine disposée de manière à scier des micro-tranchées et placer des gaines/câbles dans les micro-tranchées, ladite machine comprenant une lame de scie disposée de manière à scier une micro-tranchée dans une zone ; ladite machine comprenant en outre :
- Un dispositif de stabilisation disposé de manière à stabiliser les parois de ladite micro-tranchée lors de la mise en place de gaines/câbles à l'intérieur de ladite micro-tranchée, ledit dispositif de stabilisation étant placé immédiatement derrière ladite lame de scie dans ladite micro-tranchée, et ledit dispositif de stabilisation comprenant des moyens de guidage pour le guidage d'au moins une gaine / un câble lorsque celui-ci est mis en place dans ladite micro-tranchée ;
- au moins trois roues pour entraîner ladite machine, où lesdites roues sont réglables verticalement individuellement de manière à pouvoir commander une hauteur et/ou une inclinaison de ladite machine par rapport au sol ;
ladite machine étant **caractérisée par** un capteur de position pour chacune desdites roues, lesdits capteurs de position étant disposés de manière à détecter la position verticale de chaque roue associée.

2. Une machine selon la revendication 1, où lesdits moyens de guidage sont disposés de manière à préserver l'ordre d'une pluralité de gaines / câbles lorsque ceux-ci sont placés dans ladite micro-tranchée.

3. Une machine selon l'une quelconque des revendications précédentes, où ledit dispositif de stabilisation comprend une entrée et une sortie pour les gaines / câbles, lesdites entrée et sortie étant reliées auxdits moyens de guidage.

4. Une machine selon la revendication 3, où lesdits moyens de guidage sont des canaux dans ledit dispositif de stabilisation, et ladite entrée et ladite sortie sont reliées entre elles au moyen desdits canaux.

5. Une machine selon la revendication 4, où une distance minimale entre ladite sortie et ladite lame de scie est comprise entre 100 et 500 mm.

6. Une machine selon la revendication 4 ou 5, où ladite entrée, ladite sortie et lesdits canaux sont fixés ensemble de manière amovible sur ledit dispositif de stabilisation.

7. Une machine selon l'une quelconque des revendications précédentes où ledit dispositif de stabilisation comprend une partie avant et une partie arrière, ladite partie avant étant située immédiatement derrière ladite lame de scie et ayant une section de forme complémentaire à la forme de ladite lame de scie.

8. Une machine selon l'une quelconque des revendications 6 à 7, où ladite entrée, ladite sortie et lesdits canaux sont disposés sur ladite partie arrière dudit dispositif de stabilisation.

9. Une machine selon l'une quelconque des revendications 7 à 8, où ledit dispositif de stabilisation a une section transversale en forme de hache sur ladite partie avant.

10. Une machine selon l'une quelconque des revendications précédentes,
où ledit dispositif de stabilisation a une section transversale dont la largeur maximale est égale ou légèrement inférieure à la largeur de ladite lame de scie ; et/ou
où une plus faible distance entre ladite lame de scie et ledit dispositif de stabilisation est supérieure à 0 mm mais inférieure à 20 mm ; et/ou
où une profondeur opérationnelle dudit dispositif de stabilisation dans ladite tranchée est jusqu'à 50 mm inférieure à une profondeur opérationnelle de ladite lame de scie ; et/ou
ledit dispositif de stabilisation et ladite lame de scie sont disposés de manière à être levés et abaissés indépendamment l'un de l'autre ; et/ou
comprenant en outre au moins un tambour disposé de manière à maintenir les gaines/câbles avant de placer lesdits gaines/câbles à l'intérieur de ladite micro-tranchée via ledit dispositif de stabilisation ; et/ou
lesdites roues sont réglables verticalement individuellement au moyen de dispositifs d'élévation/abaissement individuels, chaque dispositif d'élévation/abaissement individuel étant disposé de manière à régler verticalement la roue qui lui est associée ; et/ou
lesdites au moins trois roues sont disposées avec deux des roues sur les coins gauche et droit de ladite machine, respectivement.

11. Une machine selon l'une quelconque des revendications précédentes,
comprenant en outre au moins un capteur d'inclinaison disposé de manière à détecter un écart de ladite machine par rapport à un angle prédéfini.

12. Une machine selon la revendication 11, comprenant en outre des moyens de traitement disposés de manière à recevoir des signaux d'entrée desdits capteurs de position et dudit capteur d'inclinaison, et disposés de manière à envoyer des signaux de commande auxdites roues de manière à commander une hauteur et/ou une inclinaison de ladite machine sur la base desdits signaux d'entrée.

13. Une machine selon la revendication 12 où lesdites roues sont commandées de manière à maintenir substantiellement ladite lame de scie audit angle prédéfini pendant le fonctionnement.

14. Une machine selon l'une quelconque des revendications précédentes, comprenant en outre au moins un canal de remplissage disposé immédiatement derrière ledit dispositif de stabilisation ou étant intégré audit dispositif de stabilisation, où ledit canal de remplissage est disposé de manière à guider un matériau de remplissage à l'intérieur de ladite tranchée depuis un récipient contenant le matériau de remplissage, via un tuyau souple.

15. Une machine selon la revendication 14, comprenant en outre un capteur de niveau et un régulateur,
- ledit capteur de niveau étant disposé de manière à détecter un niveau de matériau de remplissage dans ladite tranchée, et
- ledit régulateur étant disposé de manière à commander la sortie de matériau de remplissage en provenance dudit canal de remplissage ; et
- ledit capteur de niveau et ledit régulateur étant en outre disposés de manière à remplir ladite tranchée jusqu'à un niveau prédéterminé de matériau de remplissage.
